# EUROPÄISCHE PATENTSCHRIFT

(11) **EP 3 511 191 B1**
(45) Veröffentlichungstag und Bekanntmachung des Hinweises auf die Patenterteilung: **08.03.2023**
(21) Anmeldenummer: 18020511.4
(22) Anmeldetag: 18.10.2018
(51) Int. Cl.: B60L 1/02, B60L 1/04, B60L 53/18

(54) **TEMPERIEREN EINES LADEKABELS FÜR EINE SCHNELLADESTATION FÜR FAHRZEUGE MIT ELEKTRISCHEM ANTRIEB SOWIE SCHNELLLADESTATION**
HEATING OF A CHARGING CABLE FOR A QUICK CHARGING STATION FOR ELECTRICALLY DRIVEN VEHICLES AND QUICK CHARGING STATION
CHAUFFAGE D'UN CÂBLE DE CHARGE POUR UNE STATION DE CHARGE RAPIDE POUR VÉHICULES À ENTRAÎNEMENT ÉLECTRIQUE ET STATION DE CHARGE RAPIDE

(30) Priorität: 15.01.2018 DE 102018100731
(43) Veröffentlichungstag der Anmeldung: 17.07.2019
(73) Patentinhaber: Dr.Ing. H.C. F. Porsche Aktiengesellschaft, 70435 Stuttgart (DE)
(72) Erfinder: Reber, Volker, 74544 Michelbach a. d. Bilz (DE); Götz, Stefan, 85659 Forstern (DE); Rönfanz, Jari, 75417 Mühlacker (DE)

(56) Entgegenhaltungen:
- DE-A1-102012 208 005
- DE-U1-202011 050 446
- JP-A- H10 108 376
- JP-A- 2010 193 618

## Beschreibung

Die vorliegende Erfindung betrifft ein Verfahren zum Temperieren eines Ladekabels einer Schnellladestation zum Schnellladen einer Batterie eines Fahrzeugs mit einem elektrischen Antrieb.

Fahrzeuge mit einem elektrischen Antrieb umfassen üblicherweise eine Antriebsbatterie, welche elektrische Energie zum Antrieb des Fahrzeugs bereitstellt. Das Fahrzeug kann ein ausschließlich elektrisch betriebenes Fahrzeug sein, oder ein sogenanntes Hybridfahrzeug, welches neben dem elektrischen Antrieb zusätzlich einen weiteren, konventionellen Antrieb aufweist, typischerweise einen Verbrennungsmotor. Die Antriebsbatterie wird hier auch vereinfacht als Batterie bezeichnet.

Die Antriebsbatterie umfasst dabei meist eine Vielzahl Batteriezellen, die in Reihe und parallel miteinander verschaltet sind, um für den elektrischen Antrieb eine geeignete Kombination aus Strom und Spannung bereitzustellen.

Die Akzeptanz elektrisch angetriebener Fahrzeuge ist derzeit allerdings noch niedrig, da ein Laden der Antriebsbatterie einen langen Zeitraum erfordert. Dabei sind verschiedene Strategien zum Laden der Antriebsbatterie bekannt.

Für ein Laden an einer gewöhnlichen Wechselspannungs- oder Drehstromsteckdose verfügt ein Fahrzeug typischerweise über ein On-bord-Ladegerät, das sowohl eine erforderliche Wandlung von Wechselstrom in Gleichstrom vornimmt, als auch den Ladebetrieb insgesamt steuert. Die Ladesäule ist in diesem Fall also passiv.

Dieser AC-Lademodus ist jedoch aufgrund der verfügbaren Anschlussleistung, die i. d. R. durch eine Versorgungsspannung von 230V bzw. 400V und einen Versorgungsstrom von maximal 16 A bzw. 32 A, in seiner Leistung begrenzt. Dadurch ist die Ladegeschwindigkeit beim Laden im AC-Lademodus eingeschränkt, und es können sich bei heutigen Elektrofahrzeugen Ladezeiten von mehreren Stunden je 100 km Reichweite ergeben.

Aufgrund der langen Ladezeiten für AC-Laden wurde DC-Laden mit Gleichspannung entwickelt. Im Gegensatz zum AC-Laden verfügt das Fahrzeug hierbei nicht über ein eigenes Ladegerät zur Einstellung und Einhaltung von Ladeparametern, d.h. insbesondere Ladestrom und -Spannung. Stattdessen führt die fahrzeugexterne Ladestation den Ladevorgang durch und formt ebenfalls Spannung und Strom so, wie es für das Laden der Antriebsbatterie des verbundenen Fahrzeugs erforderlich bzw. gewünscht ist. Die entsprechende Ladestation ist dann für die Einhaltung von Ladeparametern verantwortlich.

Ein Ladekabel umfasst beim DC-Laden meist zwei DC-Ladeleitungen, die während des Ladevorganges typischerweise direkt mit den Polen der Antriebsbatterie des Fahrzeuges verbunden werden. Eine galvanische Trennung zwischen den DC-Ladeleitungen und der Antriebsbatterie erfolgt nicht. Die Leistungen von solchen DC-Ladestationen liegen bei derzeit bis zu 50 kW. Dies ist ein Vielfaches von rechnerisch möglichen 12,8kVA, wie sie im AC-Lademodus beim Laden mit 400V Drehstrom bei 32A theoretisch erreicht werden können. Das DC-Laden ermöglicht somit gegenüber dem AC-Laden bereits ein deutlich beschleunigtes Laden der Antriebsbatterie.

Aktuell verfügbare Fahrzeuge haben eine Antriebsbatterie mit einer Gesamtkapazität von oft 30-60 kWh, teilweise bis zu 100 kWh. Damit ergeben sich selbst bei der derzeitigen DC-Ladetechnologie rechnerische Ladezeiten für eine vollständige Ladung der Antriebsbatterie von mindestens ein bis zwei Stunden. Aufgrund realer Beschränkungen beim Laden der Antriebsbatterie können die Ladezeiten in der Praxis noch länger sein. Beispielsweise werden aktuelle Batterien vor dem Erreichen einer vollständigen Ladung oft nicht mehr mit maximalem Ladestrom geladen, um die Lebensdauer der Batterie zu erhöhen und Beschädigungen zu vermeiden.

Derzeit werden verbesserte DC-Schnelladestationen entwickelt, die beispielsweise eine maximale Leistung von bis zu 300 kW aufweisen, um Ladegeschwindigkeiten von mehr als 20 km/min zu erreichen oder sogar zu überbieten. Diese Leistung kann erreicht werden, indem beispielsweise Ladespannungen von bis zu 1000 V verwendet werden, um erforderliche Ladeströme sinnvoll zu begrenzen, in diesem Fall beispielsweise auf 300A. Damit soll das Nachladen der Antriebsbatterie beispielsweise während Reisen in Größenordnungen gebracht werden, die Kunden vom Tanken ihrer bisherigen Fahrzeuge mit Verbrennungsmotoren gewohnt sind. Beispielhafte Details zum DC-Laden und den entsprechenden Vorgängen im Ladesystem und dem Fahrzeug sind in DIN EN 61851 beschrieben.

Entsprechende Schneiladestationen erfordern also große Ladeströme, wodurch entsprechend große Kupferquerschnitte der DC-Ladeleitungen im Ladekabel notwendig sind. Ferner sind aufgrund von Witterung, Lichteinflüssen und der verwendeten DC-Hochspannung ein entsprechend dicker und widerstandsfähiger Kabelmantel sowie eine ausreichend dicke Isolierung im Inneren der Ladekabel erforderlich. In Summe überschreiten die Durchmesser typischer Ladekabel bereits heute oft 30 mm, wobei für die Zukunft noch größere Kabelquerschnitte zu erwarten sind. Dies erschwert die Handhabung der Ladekabel deutlich, schon aufgrund eines Gewichts des Leiters, der typischerweise aus Kupfer oder Aluminium gefertigt ist, und der Isolierung bzw. des Kabelmantels. Auch weisen die verwendeten Materialien des Leiters und der Isolierung, die meist aus Kunststoffen gefertigt sind, wie beispielsweise Polyurethan, eine hohe Steifigkeit auf. Die hohe Steifigkeit verstärkt die Wirkung des hohen Kabelgewichtes, indem das Ladekabel und damit der Ladestecker sehr schlecht beweglich und insbesondere sehr schlecht drehbar sind. Außerdem wird das Kabelgewicht oft nicht senkrecht zu Boden gezogen, sondern kann durch die hohe Steifigkeit des Ladekabels eine große Hebelwirkung entfalten. Somit kann es schwierig sein, das Ladekabel mit dem Ladestecker von der Schnellladestation bis zu dem zu ladenden Fahrzeug zu bewegen, den Ladestecker mit einer Ladebuchse des Fahrzeugs fein auszurichten und abschließend den Ladestecker mit der Ladebuchse zu verbinden. Dabei kann es zu einer schnellen Ermüdung oder Erschöpfung kommen, was die Akzeptanz gegenüber Elektrofahrzeugen beeinträchtigen kann.

Zwar sind auch hochflexible Ladekabel mit fein filamentierten Kupferleitern und weichen Isolations- und Mantelmaterialien bekannt, beispielsweise aus Weich-PVC (PVC-P) oder vorzugsweise aus Silikon-basierten Materialien. Diese Materialien sind aber teuer und in der Regel sehr anfällig für mechanische Beschädigungen und Umwelteinflüsse.

In diesem Zusammenhang ist aus der US 2015/0115889 A1 eine elektrische Anschlussanordnung für ein Ladesystem, insbesondere zum Aufladen einer Fahrzeugbatterie eines Kraftfahrzeuges bekannt. Die Anschlussanordnung umfasst ein erstes Anschlusselement, das mit einer Ladestation verbindbar ist und das in elektrischen Ladekontakt mit einem zweiten Anschlusselement treten kann, das an einer mobilen Plattform gelagert ist. Dabei ist in das erste Anschlusselement und/oder in das zweite Anschlusselement wenigstens ein Heizelement integriert.

Außerdem ist aus der DE 10 2011 119 495 A1 ein Ladekabel zum Laden einer kraftfahrzeugseitigen Energiespeichereinheit für elektrische Energie bekannt. Das Ladekabel umfasst zumindest ein Anschlusselement zur Verbindung mit einem kraftfahrzeugseitigen Anschluss der Energiespeichereinheit oder einem Anschluss an eine externe Energiequelle, welche zur Bereitstellung von elektrischer Energie ausgebildet ist, wobei eine elektrische Heizvorrichtung zum Beheizen des Anschlusselements und zumindest eines Abschnitts des Ladekabels vorgesehen ist.

Weiter sind aus der US 2011/0199047 A1 ein Ladegerät und ein Ladesystem bekannt. Das Ladegerät enthält ein Ladekabel und einen Ladestecker. Eine Heizung ist so konfiguriert, dass sie den Ladestecker mit durch das Ladekabel bereitgestelltem elektrischem Strom erhitzt. Eine Zustandsbestimmungseinrichtung ist ausgebildet, einen Ladezustand einer im Fahrzeug montierten Batterie zu ermitteln und um zu bestimmen, ob eine Erwärmungsbedingung zum Heizen des Ladesteckers erfüllt ist. Ein Heizungsregler ist konfiguriert, um eine Erwärmung durch die Heizung basierend auf einer Bestimmung der Zustandsbestimmungseinrichtung zu steuern. Die Heizung ist in der Lage, in einen post-Ladungserwärmungszustand geschaltet zu werden, in dem die Heizvorrichtung den Ladestecker nach Beendigung des Ladens der im Fahrzeug montierten Batterie erwärmt. Der Heizungsregler schaltet die Heizung in den post-Ladungserwärmungszustand und steuert die durch die Heizung durchgeführte Erwärmung, wenn die Zustandsbestimmungseinrichtung feststellt, dass der Ladevorgang der in dem Fahrzeug montierten Batterie beendet ist, und weiter feststellt, dass eine Erwärmungsbedingung erfüllt ist.

Auch ist aus der US 9 321 364 B1 ein elektrischer Bus bekannt, der eine Ladeschnittstelle aufweisen kann, die an einer äußeren Oberfläche des elektrischen Busses positioniert ist. Eine oder mehrere Heizkissen können entfernbar an der Ladeschnittstelle angebracht sein und konfiguriert sein, um die Ladeschnittstelle zu erwärmen. Die Heizkissen können eine starre Platte umfassen, die eine freiliegende Oberfläche der Ladeschnittstelle bildet. Die Platte kann so positioniert sein, dass eine erste Seite der Platte eine Ladungskopf-Kontaktfläche bildet, wenn der Ladungskopf mit der Ladeschnittstelle in Eingriff kommt. Eine Heizvorrichtung kann an einer zweiten Seite der Platte gegenüber der ersten Seite angebracht sein. Die Heizvorrichtung kann ein Heizelement umfassen, das konfiguriert ist, um die Platte durch Widerstandsheizung zu erwärmen.

Aus der DE 10 2012 208 005 A1 ist es bekannt, ein mit einem Ladekabel verbundenes Anschlusselement eines Ladesystems mit einem Anschlusselement an einer Ladestation zu verbinden, wobei elektrische Kontaktabschnitte in dem Ladestation-Anschlusselement kurzschließbar sind. Bei diesem Ladesystem ist vorgesehen, dass die elektrischen Leiter eines Ladekabels nicht nur mit einer Ladeeinrichtung verbindbar sind, sondern auch mit einer Gleichstromquelle. Bei tiefen Temperaturen wird das Ladekabel von der Ladeeinrichtung elektrisch getrennt und mit der separaten Gleichstromquelle verbunden, und das Ladestation-Anschlusselement wird kurzgeschlossen. Hierdurch kann das Ladekabel erwärmt werden, wodurch sich dessen Handhabbarkeit verbessert. Sobald das mit dem Ladekabel verbundene Anschlusselement von dem Ladestation-Anschlusselement getrennt wird, kann das Ladekabel wiederum elektrisch mit der Ladeeinrichtung verbunden werden, um einen Ladevorgang einer Fahrzeugbatterie durchführen zu können.

Aus JP 2010 193618 A und aus DE 20 2011 050446 U1 ist weiterer Stand der Technik bekannt.

Ausgehend von dem oben genannten Stand der Technik liegt der Erfindung somit die Aufgabe zugrunde, ein Verfahren anzugeben, das eine einfache Handhabung eines Ladekabels zum Laden des Fahrzeugs ermöglichen.

Die Lösung der Aufgabe erfolgt erfindungsgemäß durch ein Verfahren mit den Merkmalen des Anspruchs 1. Vorteilhafte Ausgestaltungen der Erfindung sind in den Unteransprüchen angegeben.

Erfindungsgemäß ist somit ein Verfahren zum Temperieren eines Ladekabels einer Schnellladestation zum Schnellladen einer Batterie eines Fahrzeugs mit einem elektrischen Antrieb vorgesehen, umfassend die Schritte Erwärmen des Ladekabels zum Herstellen einer elektrischen Verbindung des Ladekabels mit dem Fahrzeug, Erfassen eines Verbindens des Ladekabels mit dem Fahrzeug,Beenden des Erwärmens des Ladekabels zum Schnelladen der Batterie des Fahrzeugs, Kühlen des Ladekabels während des Schnellladens, Erfassen einer bevorstehenden Trennung des Ladekabels von dem Fahrzeug, Erwärmen des Ladekabels zum Trennen des Ladekabels von dem Fahrzeug.

Grundidee der vorliegenden Erfindung ist es also, die Handhabung des Ladekabels dadurch zu verbessern, dass das Ladekabel vor der Verwendung erwärmt wird. Durch das Erwärmen wird die Steifigkeit von einem Leitermaterial, welches üblicherweise Kupfer oder Aluminium ist, von einer Isolationsschicht der Leiter des Ladekabels und von dem Ladekabelmantel reduziert. Dadurch kann eine Flexibilität des Ladekabels insgesamt verbessert werden, um dessen Handhabung zu Beginn des Ladevorganges, d.h. vor oder während einer Entnahme des Ladekabels aus einer Halterung der Ladestation zu verbessern um einen angenehmen Steckvorgang für den Nutzer zu ermöglichen. Dabei wird die Eigenschaft insbesondere von für Ladekabelmantel typischen Kunststoffen, beispielsweise Polypropylen, Polyvinylchlorid, Polyurethan, Polyamid oder Tetrafluorethylen/Teflon, aber auch von Kupferkabeln genutzt, mit steigender Temperatur flexibler zu werden und eine geringere Steifigkeit aufweisen. Allerdings wird auch die Steifigkeit von typischen Materialien für die Ladeleitungen des Ladekabels reduziert. Dies geht deutlich über im Stand der Technik bekannte Verfahren, bei denen der Ladestecker und/oder die korrespondierende Ladebuchse beheizt werden, um ein Festfrieren des Ladesteckers in der Ladebuchse zu verhindern, hinaus.

Die Erwärmung des Ladekabels verbessert insbesondere bei geringen Außentemperaturen, denen die Ladekabel oftmals ausgesetzt sind, dessen Handhabung deutlich. Dies gilt umso mehr, wenn die Schnellladestationen an Standorten mit geringen Umgebungstemperaturen, die beispielsweise unterhalb eines weltweiten oder regionalen Mittelwerts liegen, aufgestellt sind.

Eine Verwendung des Ladekabels kann beispielsweise durch einen Kontakt oder eine anderweitige Erkennung in der Halterung des Ladekabels der Schnellladestation erkannt werden, also durch eine Entnahme des Ladekabels aus seiner Halterung. Damit kann das Erwärmen gestartet werden. Alternativ kann das Ladekabel bei Nichtverwendung
kontinuierlich erwärmt werden, oder eine Erwärmung kann nach anderen Kriterien gestartet werden.

Das erfindungsgemäße Verfahren umfasst ferner die Schritte zum Erfassen einer bevorstehenden Trennung des Ladekabels von dem Fahrzeug, und zum Erwärmen des Ladekabels zum Trennen des Ladekabels von dem Fahrzeug. Zwar kann gerade beim Schnelladen mit hohen Ladeströmen davon ausgegangen werden, dass die Temperatur des Ladekabels am Ende des Ladevorganges ausreichend ist, um die Steifigkeit des Ladekabels zu reduzieren. Ggf. kann es ausreichend sein, eine Kühlung des Ladekabels am Ende des Ladevorganges zu reduzieren. Selbst wenn dies der Fall ist, erleichtert ein Erwärmen des Ladekabels dessen Handhabung zumindest dann, wenn das Ladekabel nicht unmittelbar nach einer Beendigung des Ladevorgangs von dem Fahrzeug getrennt wird, sondern erst mit einer gewissen Verzögerung. Da eine Dauer des Ladevorgangs nicht immer genau kalkulierbar ist, kann eine solche Verzögerung leicht auftreten. Auch kann beispielsweise eine Dauer einer Rast länger als ein parallel durchgeführter Schnellladevorgang sein. Prinzipiell gelten für das Trennen des Ladekabels von dem Fahrzeug dieselben Ausführungen in Bezug auf die Handhabung des Ladekabels wie beim Verbinden des Ladekabels mit dem Fahrzeug. Die bevorstehende Trennung des Ladekabels von dem Fahrzeug kann auf unterschiedliche Weise erfasst werden, wie nachstehend im Detail ausgeführt wird. Mit dem Ende des Ladevorganges kann zusätzlich eine Temperatur des Ladekabels erfasst werden, um das Ladekabel lediglich bei Bedarf zu Erwärmen.

Vorzugsweise wird das Erwärmen des Ladekabels bereits so frühzeitig gestartet, dass sich das Ladekabel ausreichend Erwärmen kann, so dass seine Steifigkeit zur Benutzung hinreichend reduziert ist. Dies gilt insbesondere für den Ladekabelmantel. Aufgrund von thermischen Eigenschaften des Ladekabels, insbesondere der Wärmeübertragung in dem Ladekabel, erfolgt die Erwärmung des Ladekabels zeitverzögert. Beispielsweise wird die Erwärmung des Ladekabels bereits gestartet, bevor das Ladekabel aus seiner Halterung entnommen wird. Damit weist das Ladekabel bei Benutzung seine gewünschte reduzierte Steifigkeit auf.

Das Erwärmen des Ladekabels kann dabei auf unterschiedliche Weisen erfolgen. Beispielsweise kann eine Heizwendel verwendet werden, die in der Halterung des Ladekabels in der Ladesäule integriert ist. Diese Heizwendel überträgt Wärme auf das Leitermaterial des Ladesteckers und darüber auf das Ladekabel mit den Ladeleitungen. Das Leitermaterial ist üblicherweise ein elektrisch gut leitendendes Metall, beispielsweise Kupfer oder Aluminium. Als Metalle weisen diese Leitermaterialien auch eine gute Wärmeleitfähigkeit auf, so dass zunächst die Ladeleitungen erwärmt werden, d.h. die Wärme wird entlang des Ladekabels verteilt. Durch die erwärmten Ladeleitungen wird auch der Ladekabelmantel mit der Isolationsschicht erwärmt. Außerdem kann ein Kühlmittelkreislauf, wie er bereits im Stand der Technik zum Kühlen der Ladeleitungen des Ladekabels während des Ladevorgangs verwendet wird, derart modifiziert werden, beispielsweise durch ein wärmeerzeugendes Bauteil, dass das Ladekabel darüber erwärmt werden kann. Eine Heizung, eine Wärmepumpe oder ein Wärmetauscher können zur Erwärmung vor dem Ladevorgang eingesetzt werden. Weiterhin kann das Ladekabel eine elektrische Heizeinrichtung aufweisen, die sich durch dieses erstreckt.

Dabei ist es besonders vorteilhaft, dass das Erwärmen des Ladekabels zum Schnelladen der Batterie des Fahrzeugs nach dem Herstellen der Kabelverbindung zwischen der Ladestation und dem Fahrzeug möglichst schnell beendet wird. Aufgrund von beim Schnellladen auftretenden großen Strömen erfolgt eine Erwärmung des Ladekabels, so dass eine weitere Erwärmung nicht erforderlich ist. Darüber hinaus kann eine übermäßige Erwärmung des Ladekabels sogar nachteilig sein, da der elektrische Widerstand des Ladekabels, d.h. der elektrische Widerstand des Leitermaterials, üblicherweise mit der Temperatur steigt, sodass die elektrischen Verluste mit der Temperatur zunehmen.

Entsprechend ist das Erfassen des Verbindens des Ladekabels mit dem Fahrzeug wichtig. Details zu dieser Erfassung sind nachstehend angegeben. Das Ladekabel wird dabei über seinen Ladestecker mit einer korrespondierenden Ladebuchse des Fahrzeugs verbunden. Für den Ladestecker und die Ladebuchse sind verschiedene Standards bekannt, beispielsweise CHAdeMO, Combined Charging System (CCS) Combo Typ 2, Mennekes-Stecker und ähnliche.

Die Schnellladestation kann prinzipiell mit einem AC-Lademodus ausgeführt sein, in dem eine Versorgungsspannung von 230V bzw. 400V und ein Versorgungsstrom von maximal 16 A bzw. 32 A verwendet werden können. Vorzugsweise ist die Schnellladestation mit einem DC-Lademodus zum DC-Laden mit Gleichspannung ausgeführt. Die Schnellladestation hat vorzugsweise eine Leistung von bis zu 50 kW, besonders bevorzugt von bis zu 300 kW. Dazu können eine Ladespannung von beispielsweise 1000V und ein Ladestrom von beispielsweise 300A eingestellt werden. Details zum DC-Laden und entsprechenden Vorgängen in der Schnellladestation und dem Fahrzeug sind beispielsweise in DIN EN 61851 beschrieben.

Das Ladekabel umfasst wenigstens zwei Ladeleitungen und einen Ladekabelmantel sowie eine ausreichend dicke Isolierung der wenigstens zwei Ladeleitungen im Inneren des Ladekabels. Die Ladeleitungen sind beispielsweise aus Kupfer oder Aluminium hergestellt, und die Isolierung der Ladeleitungen beispielsweise aus Polyurethan. Der Ladekabelmantel ist aus Kunststoff, beispielsweise Polypropylen, Polyvinylchlorid, Polyurethan, Polyamid oder Tetrafluorethylen/Teflon, hergestellt.

Um eine Erwärmung des Ladekabels während des Ladevorgangs zu begrenzen, kann zusätzlich vorgesehen sein, dass die Schnellladestation das Ladekabel während des Ladevorgangs kühlt. Entsprechende Kühleinrichtungen und -Verfahren sind als solche im Stand der Technik bekannt.

Das Fahrzeug mit einem elektrischen Antrieb kann ein ausschließlich elektrisch betriebenes Fahrzeug sein, oder ein sogenanntes Hybridfahrzeug, welches neben dem elektrischen Antrieb zusätzlich einen weiteren, konventionellen Antrieb aufweist, typischerweise einen Verbrennungsmotor. Das Fahrzeug umfasst eine Antriebsbatterie, die der Einfachheit halber im Weiteren lediglich als Batterie bezeichnet wird. Die Batterie umfasst typischerweise eine Vielzahl Batteriezellen, die in Reihe und parallel miteinander verschaltet sind, um für den elektrischen Antrieb eine geeignete Kombination aus Strom und Spannung bereitzustellen.

In vorteilhafter Ausgestaltung der Erfindung umfasst das Verfahren einen zusätzlichen Schritt zum Vorwärmen des Ladekabels. So kann beispielsweise das Ladekabel auf eine Temperatur vorgewärmt werden, die sicherstellt, dass das Ladekabel für eine nachfolgende Verbindung mit einem zu ladenden Fahrzeug rechtzeitig erwärmt werden kann, um die Steifigkeit auf ein gewünschtes Maß, welches die Handhabung des Ladekabels erleichtert, zu reduzieren. Alternativ kann das Ladekabel bei Nichtverwendung kontinuierlich mit einer geringen konstanten Leistung vorgewärmt werden. Dabei können prinzipiell verschiedene Stufen für das Vorwärmen angewendet werden, beispielsweise ein kontinuierliches Vorwärmen mit geringer Leistung als Grundzustand, und ein vorbereitendes Vorwärmen, wenn eine Benutzung des Ladekabels bereits erwartet wird, aber noch nicht bestätigt wurde. Das Vorwärmen kann temperaturabhängig erfolgen, beispielsweise abhängig von einer Umgebungstemperatur oder einer Temperatur des Ladekabels, beispielsweise einer Temperatur der Ladeleitungen des Ladekabels.

In vorteilhafter Ausgestaltung der Erfindung umfasst das Verfahren einen zusätzlichen Schritt zum Erfassen eines bevorstehenden Verbindens des Ladekabels mit dem Fahrzeug, und der Schritt des Erwärmens des Ladekabels zum Herstellen einer elektrischen Verbindung mit dem Fahrzeug erfolgt nach dem Erfassen eines bevorstehenden Verbindens des Ladekabels mit dem Fahrzeug. Das Erfassen des bevorstehenden Verbindens des Ladekabels mit dem Fahrzeug ist hilfreich, um das Erwärmen des Ladekabels bereits so frühzeitig starten zu können, dass ein Nutzer bei der Verwendung des Ladekabels, die beispielsweise mit einer Entnahme des Ladekabels aus seiner Halterung beginnt, stets ein einfach zu handhabendes Ladekabel vorfindet, so dass er dieses einfach mit seinem Fahrzeug verbinden kann. Abhängig von dem Ladekabel, insbesondere von verwendeten Materialarten und Materialdicken, benötigt eine Erwärmung des Ladekabels eine bestimmte Zeit, um eine gewünschte Flexibilität des Ladekabels zu erreichen. Um die Heizleistung gering zu halten, ist es dabei erforderlich, die Erwärmung des Ladekabels über eine ausreichende Zeit durchführen zu können.

Daher muss die bevorstehende Verwendung des Ladekabels so früh wie möglich erkannt werden. Das bevorstehende Verbinden des Ladekabels mit dem Fahrzeug kann beispielsweise erkannt werden durch eine Interaktion des Fahrers mit der Schnelladestation, beispielsweise eine Identifikation oder eine Authentisierung des Fahrers an der der Schnelladestation. Dies kann beispielsweise mit einer Bezahl- oder Identifizierungskarte, beispielsweise Kreditkarte, durch Einstecken der Karte oder drahtlos, beispielsweise mittels RFID, erfolgen. Eine solche Interaktion kann bereits durch eine erste Betätigung einer Benutzerschnittstelle der Schnellladestation gegeben sein, beispielsweise durch ein Drücken oder Berühren eines Bildschirmes oder von Bedientasten. Vorzugsweise wird ein mehrmaliges Betätigen der Benutzerschnittstelle, d.h. ein mehrmaliges Drücken oder Berühren, vorzugsweise nicht zufällig, sondern in einer erwarteten Reihenfolge innerhalb bestimmter Zeit, verwendet, um zu erkennen, dass ein Verbinden des Ladekabels mit dem Fahrzeug bevorsteht. Entsprechendes gilt auch bei einer Kommunikation des Fahrzeugs mit der Schnellladestation vor dem Herstellen der Verbindung mit dem Ladekabel. Die Kommunikation kann entweder automatisch durch das Fahrzeug oder durch den Fahrer des Fahrzeugs über eine Benutzerschnittstelle des Fahrzeugs mit der Schnellladestation erfolgen.

In vorteilhafter Ausgestaltung der Erfindung umfasst der Schritt des Erfassens eines bevorstehenden Verbindens des Ladekabels mit dem Fahrzeug ein Erfassen einer Annäherung eines Fahrzeugs an die Schnellladestation. Die Annäherung des Fahrzeugs kann beispielsweise mit einer Induktionsschleife, die in einem der Schnellladestation zugeordneten Stellplatz integriert ist, erfolgen. Alternativ können beispielsweise kamerabasierte Verfahren verwendet werden, um eine Annäherung des Fahrzeugs an die Schnellladestation zu erfassen. Auch kann das Fahrzeug bereits basierend auf einer Routenplanung und/oder einem Batterieladestand eine Mitteilung über eine bevorstehende Annäherung an die Schnellladestation senden.

In vorteilhafter Ausgestaltung der Erfindung umfasst der Schritt des Erfassens eines Verbindens des Ladekabels mit dem Fahrzeug ein Auswerten eines elektrischen Signals zwischen der Ladestation und dem Fahrzeug über das Ladekabel. Verschiedene elektrische Signale können hier prinzipiell ausgewertet werden. Dies kann ein Signal sein, welches beim Verbinden des Ladesteckers des Ladekabels mit dem Fahrzeug erzeugt wird, beispielsweise indem ein elektrischer Kontakt geöffnet oder geschlossen wird. Alternativ oder zusätzlich kann als elektrisches Signal ein Kommunikationssignal des Fahrzeugs mit der Schnellladestation ausgewertet werden, beispielsweise bei einem sogenannten "Handshake" zwischen dem Fahrzeug und der Schnellladestation. Bei dem in Europa und Nordamerika verbreiteten Ladestandard IEC 61851 hat sich dessen Control-Pilot-Signal bzw. das Proximity-Pilot-Signal als geeignet erwiesen. Für den in Asien Verbreiteten CHaDeMo-Standard kann beispielsweise das dortige Proximity-Detection-Signal herangezogen werden. Über diese Signale kann jeweils ein gesteckter Zustand des Ladesteckers in der korrespondierenden Ladebuchse des Fahrzeugs identifiziert werden, um eine Verbindung des Ladekabels mit dem Fahrzeug zu erfassen und das Erwärmen des Ladekabels zu beenden.

In vorteilhafter Ausgestaltung der Erfindung umfasst der Schritt des Erfassens eines Verbindens des Ladekabels mit dem Fahrzeug ein Erfassen eines Ablaufs eines Verbindungstimers. Ein solcher Verbindungstimer kann beispielsweise eine typische Dauer des Steckvorganges abdecken. Entsprechend wird nach dem Ablauf des Verbindungstimers die Erwärmung des Ladekabels gestoppt. Der Verbindungstimer kann beispielsweise nach einem Abschluss einer Identifikation des Fahrzeugs oder des Fahrers an der Schnellladestation oder einer Erfassung der Annäherung des Fahrzeugs an die Schnellladestation gestartet werden. An eine solche Identifikation oder Annäherung schließt sich typischerweise das Verbinden des Ladekabels mit dem Fahrzeug an.

In vorteilhafter Ausgestaltung der Erfindung umfasst der Schritt des Erfassens einer bevorstehenden Trennung des Ladekabels von dem Fahrzeug ein Erfassen eines Endes des Ladevorgangs. Zwar kann gerade beim Schnelladen mit hohen Ladeströmen davon ausgegangen werden, dass die Temperatur des Ladekabels am Ende des Ladevorganges ausreichend ist, um die Steifigkeit des Ladekabels zu reduzieren. Allerdings kann es beispielsweise aufgrund einer für das Laden der Antriebsbatterie erforderlichen Ladecharakteristik vorkommen, dass die Antriebsbatterie am Ende des Ladekabels mit einem geringen Strom geladen wird, so dass das Ladekabel dadurch nur geringfügig erwärmt wird. Insbesondere kann diese Erwärmung zu gering sein, um die Steifigkeit des Ladekabels am Ende des Ladevorgangs in einem gewünschten Maß herabzusetzen. Nach dem Ende des Ladevorgangs kann es prinzipiell zu einer beliebigen Zeit vorkommen, dass das Ladekabel von dem Fahrzeug getrennt wird, so dass nach dem Ende des Ladevorgangs das Ladekabel kontinuierlich erwärmt bzw. warmgehalten werden kann.

In vorteilhafter Ausgestaltung der Erfindung umfasst der Schritt des Erfassens einer bevorstehenden Trennung des Ladekabels von dem Fahrzeug ein Erfassen eines Signals oder einer Betätigung eines Führers des Fahrzeugs. Beispielsweise kann die Ladestation oder das Fahrzeug eine Benachrichtigung an den Fahrer des Fahrzeugs schicken, wenn der Ladevorgang abgeschlossen ist. Beispielsweise kann durch eine entsprechende Bestätigung durch den Fahrer eine bevorstehende Trennung des Ladekabels von dem Fahrzeug erfasst werden. Alternativ kann eine Annäherung des Fahrers an das Fahrzeug oder die Ladestation erkannt und als Signal für die bevorstehende Trennung des Ladekabels von dem Fahrzeug verwendet werden. Auch kann eine Interaktion des Fahrers mit der Schnellladestation eine bevorstehende Trennung des Ladekabels von dem Fahrzeug anzeigen, beispielsweise ein Abschluss eines Bezahlvorgangs oder ein "Auschecken" an der Schnellladestation.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können.

Es zeigen:
Fig. 1: eine schematische Darstellung einer Schnellladestation zum Schnellladen einer Batterie eines Fahrzeugs mit einem elektrischen Antrieb gemäß einer ersten, bevorzugten Ausführungsform in einer perspektivischen Ansicht,
Fig. 2: eine schematische Darstellung eines Ladekabels der Schnellladestation aus Fig. 1 gemäß einer zweiten Ausführungsform, wobei in dem Mantel des Ladekabels zwei Fluidkanäle angeordnet sind, in einer Schnittansicht,
Fig. 3: eine schematische Darstellung eines Ladekabels der Schnellladestation aus Fig. 1 gemäß einer dritten Ausführungsform, wobei in dem Mantel des Ladekabels zwei Fluidkanäle konzentrisch angeordnet sind, in einer Schnittansicht,
Fig. 4: eine schematische Darstellung eines Ladekabels der Schnellladestation aus Fig. 1 gemäß einer vierten Ausführungsform, wobei in zwei Ladeleitungen des Ladekabels zwei Fluidkanäle angeordnet sind, in einer Schnittansicht,
Fig. 5: eine schematische Darstellung einer Temperiervorrichtung der Schnellladestation aus Fig. 1 gemäß einer fünften Ausführungsform in einer Prinzipansicht,
Fig. 6: eine schematische Darstellung einer Temperiervorrichtung der Schnellladestation aus Fig. 1 gemäß einer sechsten Ausführungsform in einer Prinzipansicht, und
Fig. 7: ein beispielhaftes Diagramm eines Verlaufs einer Shore-Härte über die Temperatur, und
Fig. 8: ein Ablaufdiagramm eines Verfahrens zum Temperieren eines Ladekabels der Schnellladestation aus Fig. 1 gemäß einer siebten Ausführungsform.

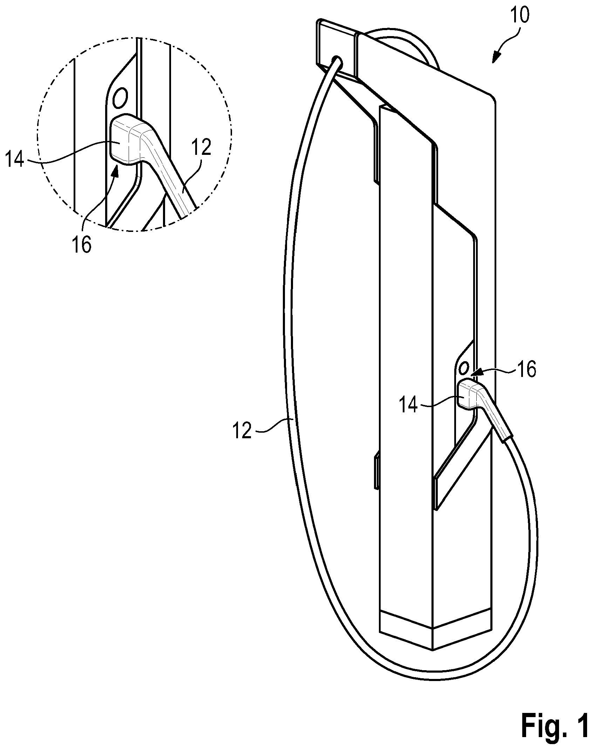

Die Figur 1 zeigt eine Schnellladestation 10 gemäß einer ersten, bevorzugten Ausführungsform.

Die Schnellladestation 10 umfasst ein Ladekabel 12 zum Schnellladen einer Batterie eines hier nicht dargestellten Fahrzeugs mit einem elektrischen Antrieb. Das Ladekabel 12 ist an seinem der Schnellladestation 10 entfernten Ende mit einem Ladestecker 14 nach dem Standard Combined Charging System (CCS) Combo Typ 2 ausgeführt. Der Ladestecker 14 ist bei Nichtbenutzung in einem Halter 16 der Schnellladestation 10 gehalten.

Die Schnellladestation 10 ist mit einem DC-Lademodus zum DC-Laden mit Gleichspannung ausgeführt. Die Schnellladestation 10 hat vorzugsweise eine Leistung von bis zu 50 kW. In einer alternativen Ausführungsform hat die Schnellladestation 10 eine Leistung von bis zu 300 kW. Um dies zu erreichen weist die Schnellladestation 10 eine Ladespannung von bis zu 1000V und einen Ladestrom von bis zu 300A auf.

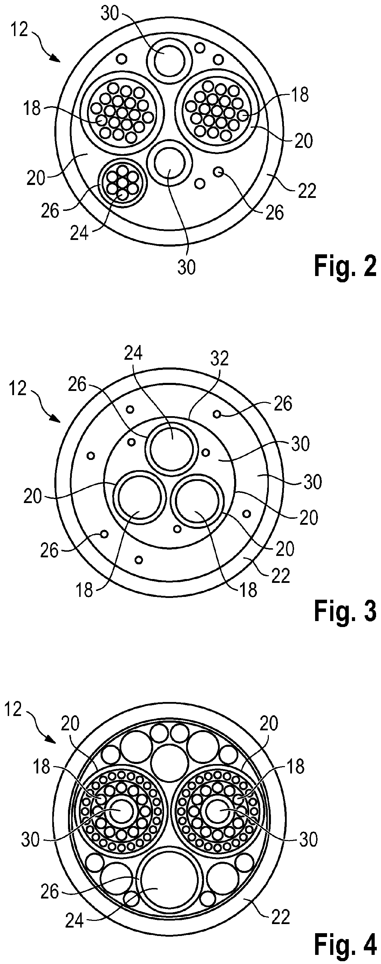

Ein Ladekabel 12 gemäß einer zweiten Ausführungsform ist im Detail in Figur 2 dargestellt. Das Ladekabel 12 der zweiten Ausführungsform kann mit der Schnellladestation 10 der ersten Ausführungsform verwendet werden.

Das Ladekabel 12 der zweiten Ausführungsform umfasst zwei DC-Ladeleitungen 18 als Ladeleiter mit entsprechenden Isolierungen 20, die in einem Ladekabelmantel 22 angeordnet sind. Die DC-Ladeleitungen 18 sind hier als DC-Ladeleitungen 18 zum Laden mit Gleichstrom ausgeführt und aus Kupfer hergestellt. Die Isolierungen 20 der DC-Ladeleitungen 18 sind aus Polyurethan gefertigt. Der Ladekabelmantel 22 ist hier aus Polypropylen hergestellt.

Weiterhin ist in dem Ladekabelmantel 22 ein Masseleiter 24 angeordnet, der von einer entsprechenden Masseisolierung 26 umgeben ist.

In dem Ladekabelmantel 22 sind außerdem eine Mehrzahl Signalleiter 28 angeordnet, mit denen das Fahrzeug mit der Schnellladestation 10 kommunizieren kann.

Außerdem sind in dem Ladekabelmantel 22 zwei Fluidleitungen 30 ausgebildet, in denen ein Fluid zirkulieren kann. Die beiden Fluidleitungen 30 sind an einem der Schnellladestation 10 zugewandten Ende mit dieser verbunden. An einem dem Ladestecker 14 zugewandten Ende des Ladekabels 12 sind die beiden Fluidleitungen 30 miteinander verbunden, um eine Zirkulation des Fluides von der Schnellladestation 10 durch eine der Fluidleitungen 30 in Richtung zu dem Ladestecker 14 und durch die andere Fluidleitung 30 von dem Ladestecker 14 zurück zu der Schnellladestation 10 zu ermöglichen.

Durch die Anordnung der beiden Fluidleitungen 30 an zwei Seiten der zwei DC-Ladeleitungen 18 können die zwei DC-Ladeleitungen 18 durch die beiden Fluidleitungen 30 effizient temperiert werden. Das Fluid kann in den beiden Fluidleitungen 30 zum Temperieren des Ladekabels 12 und insbesondere der zwei DC-Ladeleitungen 18 beitragen. Insbesondere kann durch diese Anordnung der Ladekabelmantel 22 durch die zwei Fluidleitungen 30 jeweils von zwei Seiten temperiert werden. Es ergibt sich eine große Schnittfläche mit den zwei DC-Ladeleitungen 18.

Ein Ladekabel 12 gemäß einer dritten Ausführungsform ist im Detail in Figur 3 dargestellt. Das Ladekabel 12 der dritten Ausführungsform kann mit der Schnellladestation 10 der ersten Ausführungsform verwendet werden. Außerdem entspricht das Ladekabel 12 der dritten Ausführungsform teilweise dem Ladekabel 12 der zweiten Ausführungsform, so dass im Folgenden im Wesentlichen Unterschiede zu dem Ladekabel 12 der zweiten Ausführungsform beschrieben werden.

Das Ladekabel 12 der dritten Ausführungsform umfasst zwei DC-Ladeleitungen 18 mit entsprechenden Isolierungen 20, die in einem Ladekabelmantel 22 angeordnet sind. Die DC-Ladeleitungen 18 sind dort zusammen mit einem Masseleiter 24, der von einer entsprechenden Masseisolierung 26 umgeben ist, angeordnet.

Über den Querschnitt des Ladekabelmantels 22 verteilt umfasst das Ladekabel 12 eine Mehrzahl Signalleiter 28, mit denen das Fahrzeug mit der Schnellladestation 10 kommunizieren kann.

Außerdem sind in dem Ladekabelmantel 22 zwei Fluidleitungen 30 ausgebildet, in denen ein Fluid zirkulieren kann. Die beiden Fluidleitungen 30 sind konzentrisch innerhalb des Ladekabelmantels 22 angeordnet und durch eine Trennwand 32 voneinander getrennt. Sowohl die zwei DC-Ladeleitungen 18 wie auch der Masseleiter 24 sind dabei in einem zentralen Bereich des Ladekabels 12 innerhalb derselben Fluidleitung 30 positioniert.

Auch gemäß der dritten Ausführungsformsind die beiden Fluidleitungen 30 an einem der Schnellladestation 10 zugewandten Ende mit dieser verbunden, und an einem dem Ladestecker 14 zugewandten Ende des Ladekabels 12 sind die beiden Fluidleitungen 30 miteinander verbunden.

Ein Ladekabel 12 gemäß einer vierten Ausführungsform ist im Detail in Figur 4 dargestellt. Das Ladekabel 12 der vierten Ausführungsform kann mit der Schnellladestation 10 der ersten Ausführungsform verwendet werden. Außerdem entspricht das Ladekabel 12 der vierten Ausführungsform teilweise dem Ladekabel 12 der zweiten Ausführungsform, so dass nachfolgend hauptsächlich Unterschiede zu dem Ladekabel 12 der zweiten Ausführungsform beschrieben werden.

Das Ladekabel 12 der vierten Ausführungsform umfasst zwei DC-Ladeleitungen 18 mit entsprechenden Isolierungen 20, die in einem Ladekabelmantel 22 angeordnet sind. Die DC-Ladeleitungen 18 sind dort zusammen mit einem Masseleiter 24, der von einer entsprechenden Masseisolierung 26 umgeben ist, angeordnet.

Auch das in Figur 4 dargestellte Ladekabel 12 umfasst eine Mehrzahl Signalleiter 28, mit denen das Fahrzeug mit der Schnellladestation 10 kommunizieren kann. Diese sind allerdings in Figur 4 nicht dargestellt.

Außerdem sind in dem Ladekabelmantel 22 zwei Fluidleitungen 30 ausgebildet, in denen ein Fluid zirkulieren kann. Die beiden Fluidleitungen 30 sind jeweils konzentrisch innerhalb der beiden DC-Ladeleitungen 18 ausgebildet. Auch gemäß der vierten Ausführungsform sind die beiden Fluidleitungen 30 an einem der Schnellladestation 10 zugewandten Ende mit dieser verbunden, und an einem dem Ladestecker 14 zugewandten Ende des Ladekabels 12 sind die beiden Fluidleitungen 30 miteinander verbunden.

In einer alternativen Ausführungsform bilden die Isolierungen 20 der beiden DC-Ladeleitungen 18 eine Begrenzung der beiden Fluidleitungen 30. Die DC-Ladeleitungen 18 und die Fluidleitungen 30 sind also gemeinsam innerhalb der Isolierung 20 angeordnet, und das Fluid kann die DC-Ladeleitungen 18 umströmen.

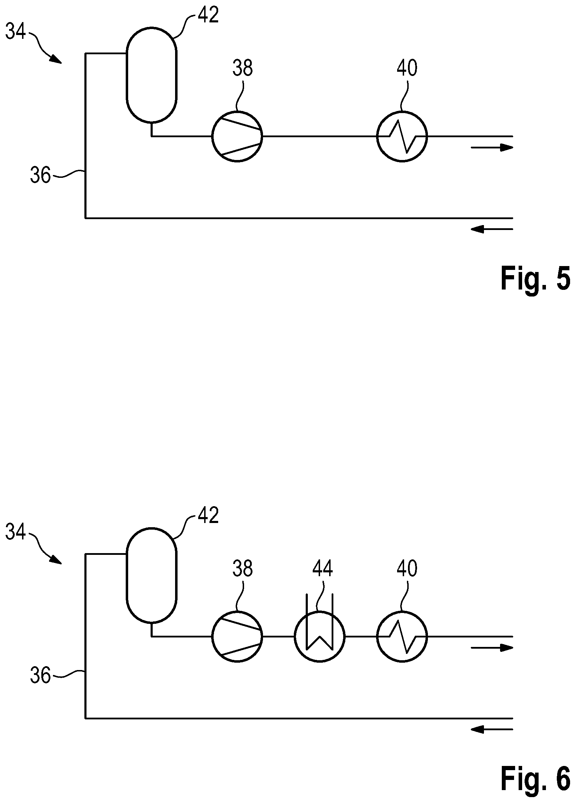

Die Schnellladestation 10 umfasst weiterhin eine Temperiervorrichtung 34. Eine Temperiervorrichtung 34 gemäß einer fünften Ausführungsform ist in Fig. 5 dargestellt.

Die Temperiervorrichtung 34 umfasst einen Leitungsabschnitt 36, der mit den Fluidleitungen 30 des Ladekabels 12 verbunden ist, um einen geschlossenen Fluidkreislauf zu bilden.

Die Temperiervorrichtung 34 umfasst weiterhin eine Pumpe 38, die in dem Leitungsabschnitt 36 angeordnet ist, um das Fluid in dem Fluidkreislauf zu zirkulieren. Außerdem umfasst die Temperiervorrichtung 34 eine steuerbare Heizvorrichtung 40, um das Fluid zu erwärmen. Weiterhin umfasst die Temperiervorrichtung 34 einen optionalen Ausgleichsbehälter 42, um beispielsweise Volumenschwankungen des Fluides basierend auf einer Änderung der Temperatur auszugleichen. Außerdem kann ein Verlust von Fluid ausgeglichen werden, und Lufteinschlüsse in dem Fluid können reduziert werden.

Alternativ umfasst die Schnellladestation 10 eine Temperiervorrichtung 34 gemäß einer sechsten Ausführungsform, die in Fig. 6 dargestellt ist. Die Temperiervorrichtung 34 der sechsten Ausführungsform entspricht weitgehend der Temperiervorrichtung 34 der fünften Ausführungsform, weshalb nachfolgend lediglich Unterschiede zu der Temperiervorrichtung 34 der fünften Ausführungsform beschrieben werden.

Die Temperiervorrichtung 34 der sechsten Ausführungsform umfasst zusätzlich zu der Temperiervorrichtung 34 der fünften Ausführungsform einen Wärmetauscher 44. Der Wärmetauscher 44 kann dem Fluid Wärme entziehen. Dadurch kann das Fluid nicht nur durch die Heizvorrichtung 40 erwärmt, sondern auch durch den Wärmetauscher 44 gekühlt werden.

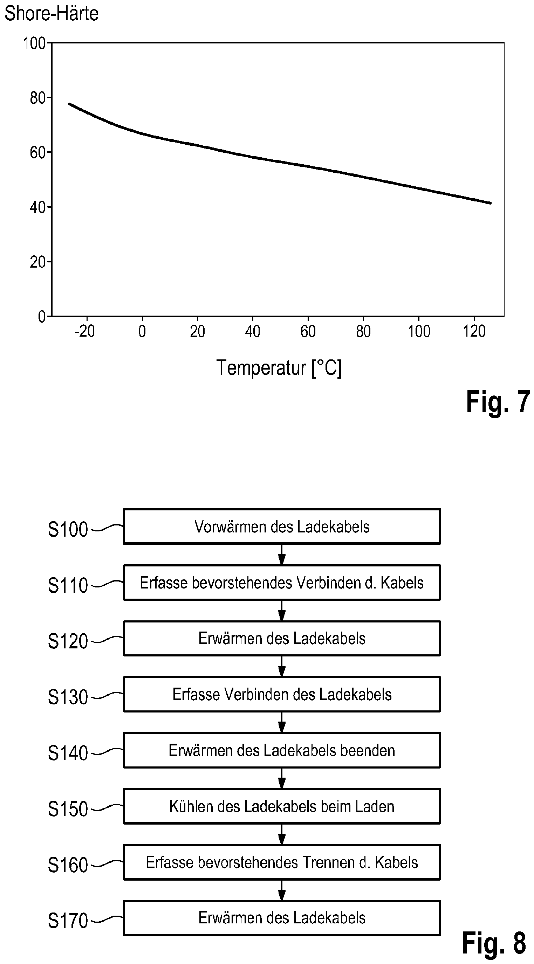

Die beschriebene Schnellladestation 10 der ersten Ausführungsform ist ausgeführt, ein Verfahren zum Temperieren des Ladekabels 12 zum Schnellladen der Batterie des Fahrzeugs durchzuführen. Das Verfahren wird nachstehend unter Bezug auf die Figur 8 beschrieben.

Das Verfahren beginnt mit Schritt S100, in dem das Ladekabel 12 vorgewärmt wird. Das Ladekabel 12 wird dabei auf eine Temperatur vorgewärmt, die sicherstellt, dass das Ladekabel 12 für eine nachfolgende Verbindung mit einem zu ladenden Fahrzeug rechtzeitig erwärmt werden kann, um die Steifigkeit auf ein gewünschtes Maß zu reduzieren. Dazu wird das Ladekabel 12 bei Nichtverwendung kontinuierlich mit einer geringen konstanten Leistung vorgewärmt. Das Vorwärmen erfolgt temperaturabhängig, d.h. abhängig von einer Umgebungstemperatur und einer Temperatur des Ladekabels 12.

In Schritt S110 wird ein bevorstehendes Verbinden des Ladekabels 12 mit dem Fahrzeug erfasst. Das bevorstehende Verbinden des Ladekabels 12 mit dem Fahrzeug wird vorliegend durch eine Interaktion des Fahrers mit der Schnelladestation 10 erfasst, beispielsweise durch eine Identifikation oder eine Authentisierung des Fahrers an der Schnelladestation 10. Dazu wird eine Bezahl- oder Identifizierungskarte, beispielsweise Kreditkarte, durch Einstecken mit der Schnelladestation 10 verbunden. Dabei wird eine erste Betätigung einer Benutzerschnittstelle der Schnellladestation 10 bereits als ein bevorstehendes Verbinden des Ladekabels 12 mit dem Fahrzeug erfasst.

In Schritt S120 erfolgt ein Erwärmen des Ladekabels 12 zum Herstellen einer elektrischen Verbindung des Ladekabels 12 mit dem Fahrzeug. Das Ladekabel 12 wird also erwärmt, um dessen Härte zu reduzieren und das Ladekabel 12 leichter biegbar zu machen. Ein entsprechendes Diagramm der Shore-Härte über die Temperatur ist in Figur 7 für einen oft eingesetzten Kunststoff gezeigt. Dabei kann bei einer Erwärmung des Ladekabels 12 auf etwa 40°C gegenüber einer Temperatur von 0°C bereits eine Reduktion der Shore-Härte von 10°Shore bis 15°Shore erreicht werden. Durch das Erfassen der bevorstehenden Verbindung des Ladekabels 12 mit dem Fahrzeug kann die Erwärmung 12 bereits gestartet werden, bevor der Ladestecker 14 des Ladekabels 12 aus seiner Halterung 16 entnommen wird.

In Schritt S130 erfolgt ein Erfassen eines Verbindens des Ladekabels 12 mit dem Fahrzeug. Dazu wird das Ladekabel 12 über seinen Ladestecker 14 mit einer korrespondierenden Ladebuchse des Fahrzeugs, die nicht in den Figuren dargestellt ist, verbunden. Es wird ein elektrisches Kommunikationssignal zwischen der Ladestation 10 und dem Fahrzeug, das über das Ladekabel 12 übertragen wird, ausgewertet, um das Verbinden zu erkennen. Hierbei handelt es sich in dem vorliegenden Ausführungsbeispiel zum Laden nach dem Ladestandard IEC 61851 um das Control-Pilot-Signal bzw. das Proximity-Pilot-Signal.

In Schritt S140 wird anschließend das Erwärmen des Ladekabels 12 beendet.

Nach dem Verbinden des Ladekabels 12 mit dem Fahrzeug wird in Schritt S150 das Ladekabel 12 gekühlt, um während des Schnellladens anfallende Verlustwärme abzuführen und den Leitungswiderstand der DC-Ladeleitungen 18 gering zu halten.

Nach dem Ende des Ladevorgangs erfolgt eine Überwachung, um in Schritt S160 eine bevorstehende Trennung des Ladekabels 12 von dem Fahrzeug zu erfassen. Dazu wird zunächst das Endes des Ladevorgangs abgewartet. In diesem Ausführungsbeispiel wird nach dem Ende des Ladevorgangs von der Schnellladestation 10 eine Benachrichtigung in der Form einer digitalen Nachricht, beispielsweise eine SMS, eine Nachricht innerhalb einer speziellen App, oder andere, an den Fahrer des Fahrzeugs geschickt. Der Fahrer schickt eine entsprechende Bestätigung auf demselben Weg an die Schnellladestation 10, was als Signal für die bevorstehende Trennung des Ladekabels von dem Fahrzeug erfasst werden. Alternativ kann eine Annäherung des Fahrers an das Fahrzeug oder die Ladestation erkannt und als Signal für die bevorstehende Trennung des Ladekabels von dem Fahrzeug verwendet werden. Auch kann eine Interaktion des Fahrers mit der Schnellladestation eine bevorstehende Trennung des Ladekabels 12 von dem Fahrzeug erfasst wird.

Anschließend wird in Schritt S170 das Ladekabel 12 erneut erwärmt, so dass das Ladekabel 12 einfach von dem Fahrzeug getrennt werden kann. Nach der Trennung des Ladekabels 12 von dem Fahrzeug wird das Erwärmen des Ladekabels beendet. Das Trennen wird entsprechend wie zuvor beschrieben durch ein Kommunikationssignal zwischen dem Fahrzeug und der Schnellladestation erfasst. Alternativ wird das Trennen dadurch erfasst, dass der Ladestecker 14 des Ladekabels 12 wieder in seine Halterung 16 gesteckt wird.

## Patentansprüche

1. Verfahren zum Temperieren eines Ladekabels (12) einer Schnellladestation (10) zum Schnellladen einer Batterie eines Fahrzeugs mit einem elektrischen Antrieb, umfassend die Schritte
Erwärmen des Ladekabels (12) zum Herstellen einer elektrischen Verbindung des Ladekabels (12) mit dem Fahrzeug,
Erfassen eines Verbindens des Ladekabels (12) mit dem Fahrzeug,
Beenden des Erwärmens des Ladekabels (12) zum Schnelladen der Batterie des Fahrzeugs,
Kühlen des Ladekabels (12) während des Schnellladens,
Erfassen einer bevorstehenden Trennung des Ladekabels (12) von dem Fahrzeug,
Erwärmen des Ladekabels (12) zum Trennen des Ladekabels (12) von dem Fahrzeug.

2. Verfahren nach Anspruch 1, **dadurch gekennzeichnet, dass**
das Verfahren einen zusätzlichen Schritt zum Vorwärmen des Ladekabels (12) umfasst.

3. Verfahren nach einem der Ansprüche 1 oder 2, **dadurch gekennzeichnet, dass**
das Verfahren einen zusätzlichen Schritt zum Erfassen eines bevorstehenden Verbindens des Ladekabels (12) mit dem Fahrzeug umfasst, und
der Schritt des Erwärmens des Ladekabels (12) zum Herstellen einer elektrischen Verbindung mit dem Fahrzeug nach dem Erfassen eines bevorstehenden Verbindens des Ladekabels (12) mit dem Fahrzeug erfolgt.

4. Verfahren nach dem vorhergehenden Anspruch 3, **dadurch gekennzeichnet, dass**
der Schritt des Erfassens eines bevorstehenden Verbindens des Ladekabels (12) mit dem Fahrzeug ein Erfassen einer Annäherung eines Fahrzeugs an die Schnellladestation (10) umfasst.

5. Verfahren nach einem der vorhergehenden Ansprüche, **dadurch gekennzeichnet, dass** der Schritt des Erfassens eines Verbindens des Ladekabels (12) mit dem Fahrzeug ein Auswerten eines elektrischen Signals zwischen der Ladestation (10) und dem Fahrzeug über das Ladekabel (12) umfasst.

6. Verfahren nach einem der vorhergehenden Ansprüche, **dadurch gekennzeichnet, dass** der Schritt des Erfassens eines Verbindens des Ladekabels (12) mit dem Fahrzeug ein Erfassen eines Ablaufs eines Verbindungstimers umfasst.

7. Verfahren nach einem der vorhergehenden Ansprüche, **dadurch gekennzeichnet, dass**
der Schritt des Erfassens einer bevorstehenden Trennung des Ladekabels (12) von dem Fahrzeug ein Erfassen eines Endes des Ladevorgangs umfasst.

8. Verfahren nach einem der vorhergehenden Ansprüche, **dadurch gekennzeichnet, dass** der Schritt des Erfassens einer bevorstehenden Trennung des Ladekabels (12) von dem Fahrzeug ein Erfassen eines Signals oder einer Betätigung eines Führers des Fahrzeugs umfasst.

## Claims

1. Method for controlling the temperature of a charging cable (12) for a fast charging station (10) for fast charging a battery of a vehicle having an electric drive, comprising the steps
heating the charging cable (12) for producing an electrical connection of the charging cable (12) to the vehicle,
detecting a connection of the charging cable (12) to the vehicle,
ending the heating of the charging cable (12) for the fast charging of the battery of the vehicle,
cooling the charging cable (12) during the fast charging,
detecting an imminent disconnection of the charging cable (12) from the vehicle,
heating the charging cable (12) to disconnect the charging cable (12) from the vehicle.

2. Method according to Claim 1, **characterized in that**
the method comprises an additional step of preheating the charging cable (12).

3. Method according to either of Claims 1 and 2, **characterized in that**
the method comprises an additional step of detecting an imminent connection of the charging cable (12) to the vehicle, and
the step of heating the charging cable (12) for producing an electrical connection to the vehicle is carried out after an imminent connection of the charging cable (12) to the vehicle has been detected.

4. Method according to preceding Claim 3, **characterized in that**
the step of detecting an imminent connection of the charging cable (12) to the vehicle comprises detecting an approach of a vehicle to the fast charging station (10) .

5. Method according to one of the preceding claims, **characterized in that**
the step of detecting a connection of the charging cable (12) to the vehicle comprises evaluating an electrical signal between the charging station (10) and the vehicle via the charging cable (12).

6. Method according to one of the preceding claims, **characterized in that**
the step of detecting a connection of the charging cable (12) to the vehicle comprises detecting an expiry of a connection timer.

7. Method according to one of the preceding claims, **characterized in that**
the step of detecting an imminent disconnection of the charging cable (12) from the vehicle comprises detecting an end of the charging operation.

8. Method according to one of the preceding claims, **characterized in that**
the step of detecting an imminent disconnection of the charging cable (12) from the vehicle comprises detecting a signal or an actuation by a driver of the vehicle.

## Revendications

1. Procédé d'équilibrage de température d'un câble de charge (12) d'une station de charge rapide (10) pour la charge rapide d'une batterie d'un véhicule à entraînement électrique ;
comprenant les étapes :
réchauffement du câble de charge (12) pour l'établissement d'une liaison électrique du câble de charge (12) avec le véhicule ;
détection d'une liaison du câble de charge (12) avec le véhicule ;
fin du réchauffement du câble de charge (12) pour la charge rapide de la batterie du véhicule ;
refroidissement du câble de charge (12) pendant la charge rapide ;
détection d'une séparation imminente du câble de charge (12) par rapport au véhicule ;
réchauffement du câble de charge (12) de séparation du câble de charge (12) par rapport au véhicule.

2. Procédé selon la revendication 1, **caractérisé en ce que** le procédé comprend une étape supplémentaire pour préchauffer le câble de charge (12).

3. Procédé selon l'une quelconque des revendications 1 ou 2, **caractérisé en ce que** le procédé comprend une étape supplémentaire de détection d'une liaison imminente du câble de charge (12) avec le véhicule ; et l'étape du réchauffement du câble de charge (12) pour l'établissement d'une liaison électrique avec le véhicule après la détection d'une liaison imminente du câble de charge (12) avec le véhicule.

4. Procédé selon la revendication précédente 3, **caractérisé en ce que** l'étape de détection d'une liaison imminente du câble de charge (12) avec le véhicule comprend une détection de l'approche d'un véhicule de la station de charge rapide (10).

5. Procédé selon l'une quelconque des revendications précédentes, **caractérisé en ce que** l'étapede détection d'une liaison du câble de charge (12) avec le véhicule comprend une analyse d'un signal électrique entre la station de charge (10)et le véhicule via le câble de charge (12).

6. Procédé, selon l'une quelconque des revendications précédentes, **caractérisé en ce que** l'étape de détection d'une liaison du câble de charge (12) avec le véhicule comprend une détection d'une expiration d'un minuteur de liaison.

7. Procédé selon l'une quelconque des revendications précédentes, **caractérisé en ce que** l'étape de détection d'une séparation imminente du câble de charge (12) d'avec le véhicule comprend une détection d'une extrémité du processus de charge.

8. Procédé selon l'une quelconque des revendications précédentes, **caractérisé en ce que** l'étape de détection d'une séparation imminente du câble de charge (12) d'avec le véhicule comprend une détection d'un signal ou d'un actionnement d'un guide du véhicule.
